**Europäisches Patentamt**

**European Patent Office**

**Office européen des brevets**

(19)

(11) **EP 1 199 788 A1**

(12) # EUROPEAN PATENT APPLICATION

(43) Date of publication:
**24.04.2002 Bulletin 2002/17**

(51) Int Cl.7: **H02M 3/155**, H02M 3/07

(21) Application number: **00830672.2**

(22) Date of filing: **17.10.2000**

| | |
|---|---|
| (84) Designated Contracting States:<br>**AT BE CH CY DE DK ES FI FR GB GR IE IT LI LU MC NL PT SE**<br><br>(71) Applicant: **STMicroelectronics S.r.l.**<br>**20041 Agrate Brianza (Milano) (IT)**<br><br>(72) Inventors:<br> • **Fontanella, Luca**<br> **30121 Venezia (IT)** | • **Ricotti, Giulio**<br> **27043 Broni (IT)**<br><br>(74) Representative: **Cerbaro, Elena, Dr. et al**<br> **STUDIO TORTA S.r.l.,**<br> **Via Viotti, 9**<br> **10121 Torino (IT)** |

(54) **Inductive DC-to-DC switching converter**

(57) The dc-to-dc converter (20) comprises an inductor (22) connected between a supply line (30) and a ground line (32) via a MOS transistor (24) operating in switching mode; and a voltage-multiplier circuit (25) formed by a plurality of capacitive voltage-multiplying stages (26.1, 26.2, 26.3) cascaded together and each having an input connected to an intermediate node (34) between the inductor (22) and the MOS transistor (24), and an output supplying a potential ($V_{H1}$, $V_{H2}$, $V_{H3}$) equal to the potential ($V_I$) of the intermediate node (34) multiplied by a respective multiplication factor.

Fig.2

**Description**

The present invention regards an inductive dc-to-dc switching converter. In particular, the present invention regards a multiple-output inductive dc-to-dc switching converter having a boost-type or buck-boost type circuit topology.

As is known, inductive dc-to-dc switching converters having boost or buck-boost circuit topology are able to generate at output high voltages, of the order of hundreds of volts, starting from relatively low input voltages, of the order of a few volts, using inductive-type components the charging and discharging of which are controlled by active components comprising control transistors operating in switching mode between the saturation condition and the interdiction condition (on/off).

For a more detailed treatment of dc-to-dc switching converters of the boost type or buck-boost type, see, for example, J.G. Kassakian, M.F. Schlecht, and G.C. Verghese, "Principles of Power Electronics", Addison Wesley.

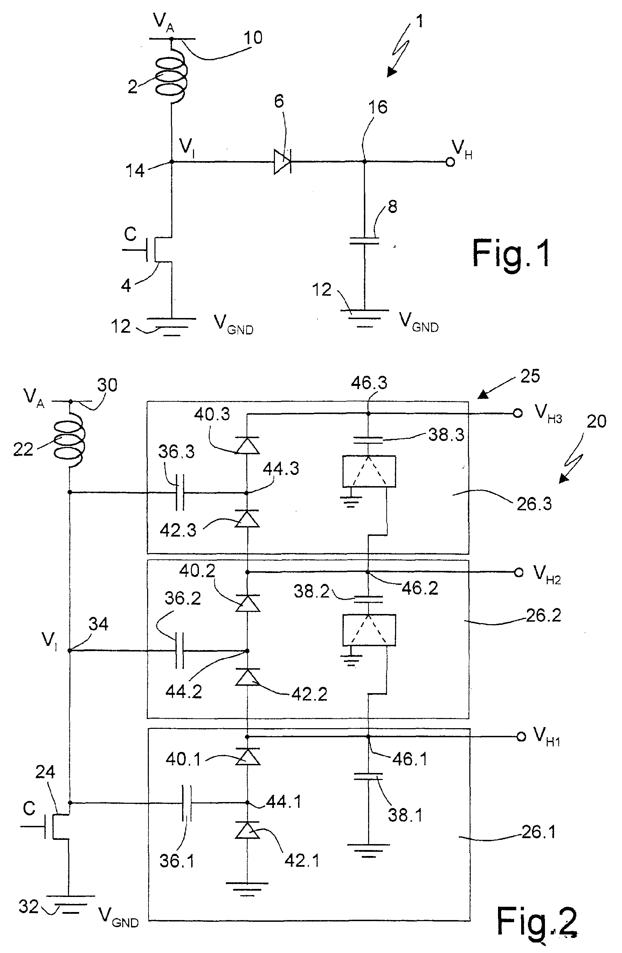

Figure 1 illustrates a schematic circuit diagram of an inductive dc-to-dc switching converter having a boost-type circuit topology.

As illustrated in figure 1, the dc-to-dc switching converter, designated as a whole by 1, comprises an inductor 2, an NMOS control transistor 4, a diode 6, and a capacitor 8.

In particular, the inductor 2 has a first terminal connected to a supply line 10 set at a supply voltage $V_A$, and a second terminal connected to a drain terminal of the control transistor 4, which has a source terminal connected to a ground line 12 set at a ground voltage $V_{GND}$, and a gate terminal receiving a control signal C.

The second terminal of the inductor 2 defines, jointly with the drain terminal of the control transistor 4, an intermediate node 14 on which an intermediate voltage $V_I$ is present, the value of which is correlated to the inductance of the inductor 2 and to the current flowing in the inductor 2 itself.

The diode 6 has an anode terminal connected to the intermediate node 14, and a cathode terminal connected to a first terminal of the capacitor 8, the second terminal of which is connected to the ground line 12.

The cathode terminal of the diode 6 defines, jointly with the first terminal of the capacitor 8, an output node 16 of the dc-to-dc converter 1 on which an output voltage $V_H$ higher than the supply voltage $V_A$ is supplied.

Operation of the dc-to-dc converter 1 is known and will therefore be described hereinafter only briefly and solely for the purpose of facilitating understanding of the problems from which the present invention stems.

The control transistor 4 is controlled in switching between the saturation condition and the interdiction condition (on/off) at a pre-set frequency, referred to as switching frequency. When the control transistor 4 is on, a current flows between the supply line 10 and the ground line 12 through the inductor 2, in which a quantity of electrical energy is stored which is correlated to the switching-on time of the control transistor 4. When, instead, the control transistor 4 is off, a current flows between the inductor 2, the diode 6 and the capacitor 8, and hence the electrical energy stored in the inductor 2 is transferred, except for the losses, to the capacitor 8.

In addition, before turning off the control transistor 4, an amount of electrical energy must have been stored in the inductor 2 that is sufficient for charging the equivalent parasitic capacitance "seen" from the intermediate node 14 at a value such as to bring the voltage $V_I$ of the intermediate node, and hence the output voltage $V_H$, to the desired value $V_0$. In mathematical terms, this may be represented by the following inequality:

$$\frac{1}{2}\,C_P V_0^2 \le \frac{1}{2}\,LI^2 \qquad (1)$$

where I is the current flowing in the inductor 2 when the control transistor 4 is on, $C_P$ is the equivalent parasitic capacitance "seen" from the intermediate node 14, the left-hand member of the inequality represents the electrical energy necessary for charging the equivalent parasitic capacitance $C_P$, and the right-hand member of the inequality represents the electrical energy stored in the inductor 2.

As may be noted from an analysis of the above inequality, in order to obtain output voltages $V_H$ of the order of hundreds of volts it is necessary to cause a decidedly high electrical current to flow in the inductor 2, i.e., a current likely to be of the order of a few amperes, which consequently generates a series of problems, well known to the persons skilled in the art, the solution of which entails considerable difficulties in terms of design and circuitry.

In addition to the problems deriving from the high values of the currents involved, inductive dc-to-dc switching converters of the type described above present the additional drawback of being able to supply a single boosted voltage at output, so that, in those applications in which numerous boosted voltages are required that are different from one another, it is necessary to resort to the use of numerous distinct inductors or of inductors having numerous windings, one for each boosted voltage required, and this entails a considerable occupation of area.

Similar problems may be encountered also in inductive dc-to-dc switching converters having buck-boost circuit topology, which differ from those having boost circuit topology basically in that the inductor and the control transistor swap positions; namely, it is the inductor that is connected to the ground line, whilst the control transistor is connected to the supply line.

The purpose of the present invention is to provide an inductive dc-to-dc switching converter which makes it possible to overcome, at least in part, the drawbacks of the known inductive dc-to-dc switching converters described above.

According to the present invention, an inductive dc-to-dc switching converter is therefore provided, as defined in Claim 1.

For a better understanding of the present invention, some preferred embodiments thereof will now be described purely to furnish non-limiting examples, with reference to the attached drawings, in which:

- Figure 1 shows a circuit diagram of a known inductive dc-to-dc switching converter with boost-type circuit topology; and
- Figures 2 and 3 show circuit diagrams of inductive dc-to-dc switching converters with boost-type circuit topology according to preferred embodiments of the present invention.

Figure 2 shows an inductive dc-to-dc switching converter according to a first embodiment of the present invention.

The dc-to-dc converter, designated as a whole by 20, comprises an inductor 22, a control transistor 24, and a voltage-multiplying or voltage-boosting circuit 25.

In particular, the inductor 22 has a first terminal connected to a supply line 30 set at a supply voltage $V_A$ and a second terminal connected to a drain terminal of the control transistor 24, which has a source terminal connected to a ground line 32 set at a ground voltage $V_{GND}$, and a gate terminal receiving a control signal C.

The second terminal of the inductor 22 defines, jointly with the drain terminal of the control transistor 24, a first intermediate node 34 on which an intermediate voltage $V_I$ is present, the value of which is correlated to the inductance of the inductor 22 and to the current following in the inductor 22 itself.

The voltage- multiplying circuit 25 is formed by three capacitive voltage-multiplying stages cascaded together and designated by 26.1, 26.2 and 26.3.

The voltage-multiplying stages 26.1-26.3 have the same circuit structure, and each comprises a boosting capacitor, designated, respectively, by 36.1, 36.2, and 36.3; a filtering capacitor, designated, respectively, by 38.1, 38.2, and 38.3; a first diode, designated, respectively. by 40.1, 40.2, and 40.3; and a second diode, designated, respectively, by 42.1, 42.2, and 42.3.

In particular, each boosting capacitor 36.1-36.3 has a first terminal connected to the intermediate node 34 and a second terminal connected to a second intermediate node, designated, respectively, by 44.1, 44.2, and 44.3, to which an anode terminal of the respective first diode 40.1-40.3 and a cathode terminal of the respective second diode 42.1-42.3 are connected.

The cathode terminal of each second diode 42.1-42.3 is connected to a first terminal of the respective filtering capacitor 38.1-38.3 and defines, jointly with the latter, a respective output node, designated, respectively, by 46.1, 46.2, and 46.3, of the dc-to-dc converter 1, on which an output voltage is supplied, designated, respectively, by $V_{H1}$, $V_{H2}$, $V_{H3}$, and to which a respective load (not illustrated) is connected.

In addition, the anode terminal of the first diode 42.1 of the first capacitive multiplier 26.1 is connected to the ground line 32; the anode terminal of the first diode 42.2 of the second capacitive multiplier 26.2 is connected to the output node 46.1 of the first capacitive multiplier 26.1; and the anode terminal of the first diode 42.3 of the third capacitive multiplier 26. 3 is connected to the output node 46.2 of the second capacitive multiplier 26.2.

Finally, the second terminal of the filtering capacitor 38.1 of the first capacitive multiplier 26.1 is connected to the ground line 32; the second terminal of the filtering capacitor 38.2 of the second capacitive multiplier 26.2 is connected either to the ground line 32 or to the output node 46.1 of the first capacitive multiplier 26.1, as represented schematically in Figure 2 with a dashed line; and the second terminal of the filtering capacitor 38.3 of the third capacitive multiplier 26.3 is connected either to the ground line 32 or to the output node 46.2 of the second capacitive multiplier 26.2, as represented schematically in Figure 2 with a dashed line.

In particular, the second terminals of the filtering capacitors 38.2, 38.3 respectively of the second capacitive multiplier 26.2 and of the third capacitive multiplier 26.3 are irreversibly connected either to the ground line 32 or to the output node 46.1, 46.2 of the first capacitive multiplier 26.1 and of the second capacitive multiplier 26.2 according to the particular application to which the dc-to-dc switching converter 20 is destined, as will be better clarified hereinafter, and this choice is made once and for all during the manufacture of the dc-to-dc switching converter 20.

Operation of the dc-to-dc switching converter 20 is as described hereinafter.

The control transistor 24 is controlled in switching between the saturation condition and the interdiction condition (on/off) at a given switching frequency. When the control transistor 24 is turned on, in the inductor 22 an amount of electrical energy is then stored which is correlated to the switching time of the control transistor 24, whilst, when the control transistor 24 is turned off, the electrical energy stored in the inductor 22 is transferred, except for losses, to the filtering capacitors 38.1-38.3, causing the voltage across them to increase.

In particular, thanks to the fact that the anode terminals of the first diodes 42.2 and 42.3 of the second and third capacitive multipliers 26.2 and 26.3 are connected to the output node 46.1 of the first capacitive multiplier 26.1, and, respectively, to the output node 46.2 of the second capacitive multiplier 26.2, the voltage of the second intermediate node 44.2 depends not only on the voltage $V_I$ of the first intermediate node 34, but also on the voltage of the second intermediate node 44.1, and likewise the voltage of the second intermediate node 44.3 depends both on the potential voltage $V_I$ of the first intermediate node 34 and on the voltages of the second intermediate nodes 44.1 and 44.2.

In the dc-to-dc converter 20, then, the output voltage $V_{H1}$ can reach, at the most, a value equal to the maximum value assumed by the voltage $V_I$, the output voltage $V_{H2}$ can reach a value equal to twice that of the output voltage $V_{H1}$, and the output voltage $V_{H3}$ can reach a value equal to three times that of the output voltage $V_{H1}$.

For example, if the inductor 22 is charged in such a way that the voltage $V_{H1}$ assumes a value of 100 V, with the dc-to-dc converter according to the invention it is possible to obtain both an output voltage $V_{H2}$ of 200 V and an output voltage $V_{H3}$ of 300 V.

Generalizing to the case of n voltage-multiplying stages cascaded together in the way described above and equal to one another, the maximum output voltage, corresponding to the one present on the output node of the nth capacitive multiplier, is equal to n times the maximum value assumed by the voltage $V_I$.

This, given the same output voltage (with respect to the one obtainable with the prior art dc-to-dc converters described previously with reference to Figure 1), makes it possible to rewrite the inequality (1) as follows:

$$\frac{1}{2n^2} C_P V_0^2 \leq \frac{1}{2} LI^2 \qquad (2)$$

which, if solved in the variable I, shows how the current necessary for charging the parasitic capacitance $C_P$ associated to the first intermediate node 34 is reduced by a factor $n$ with respect to the one necessary in dc-to-dc converters according to the prior art which are not provided with capacitive multipliers, with a consequent significant reduction in the problems, at the design and circuitry level, referred to at the beginning of the present description, which derive from the high values of the currents involved.

In addition, if the filtering capacitors 38.2 and 38.3 are connected to the ground line, across them there is present a voltage equal to twice and, respectively, three times the voltage $V_I$, whilst if they are respectively connected to the output node 46.1 and to the output node 46.2, across them there is present a voltage equal to the voltage $V_I$. Consequently, connection of the filtering capacitors to the output nodes of the voltage-multiplying stage preceding in the cascade enables a reduction by a factor $n$ in the maximum voltage that the said filtering capacitors are to withstand, and this therefore enables use of manufacture technologies that are less costly in terms of area occupied on the silicon, as well as meaning that there are fewer problems in terms of insulation.

Consequently, the choice of connecting the filtering capacitors to the ground line rather than to the output nodes of the voltage-multiplying stages preceding in the cascade depends upon the type of application to which the dc-to-dc converter 20 is destined, and in particular depends upon the existence or otherwise of limitations on the overall occupation of area on silicon of the dc-to-dc converter.

It is moreover emphasized that the output voltages $V_{H1}$, $V_{H2}$, $V_{H3}$ are equal to one another only in the case where the loads connected to the output nodes 46.1-46.3 are equal to one another and the boosting capacitors 36.1-36.3 have capacitances equal to one another and equal to an appropriate value that is a function of the loads. Consequently, taking into account the values of the loads connected to the output nodes 46.1-46.3 and sizing the boosting capacitors 36.1-36.3 accordingly, it is possible to obtain output voltages $V_{H1}$, $V_{H2}$, $V_{H3}$ different from the ones described above, in particular correlated to the voltage $V_I$ through a non-integer proportionality factor.

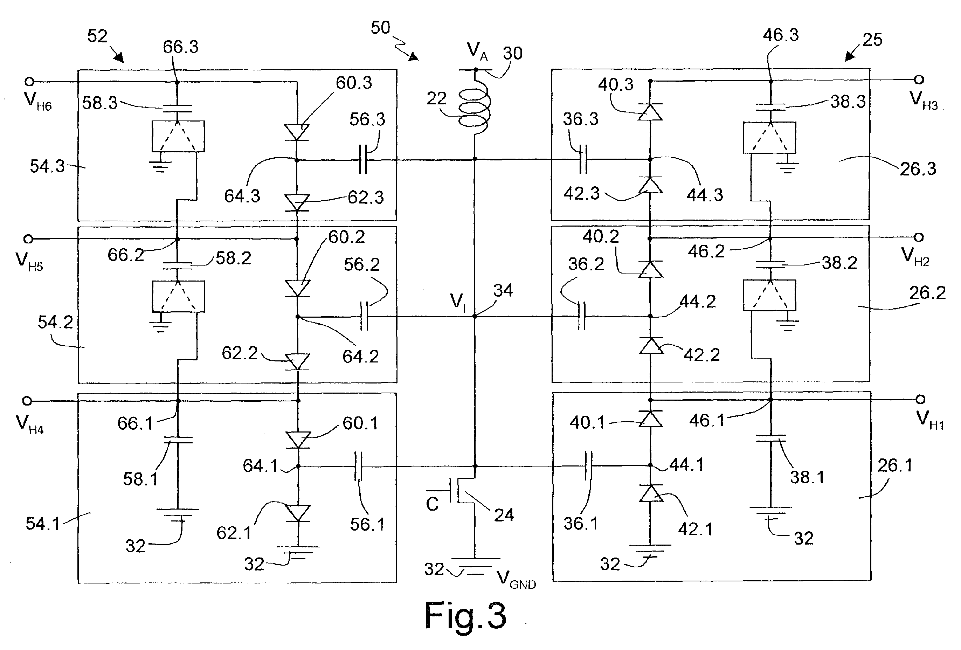

Figure 3 shows an inductive dc-to-dc switching converter according to a second embodiment of the present invention.

The dc-to-dc converter, designated as a whole by 50, has a circuit structure which is in part similar to that of the dc-to-dc converter 20, and therefore similar parts will be designated by the same reference numbers.

In particular, the dc-to-dc converter 50 comprises, as does the dc-to-dc converter 20, an inductor 22, a control transistor 24, and a voltage-multiplying circuit 25 formed by three voltage-multiplying states 26.1, 26.2, 26.3 cascaded together.

The dc-to-dc converter 50 comprises a further voltage-multiplying circuit 52 distinct from the voltage-multiplying circuit 25 and also formed by three capacitive voltage-multiplying stages cascaded together and designated by 54.1, 54.2 and 54.3.

In particular, the voltage-multiplying stages 54.1-54.3 have a circuit structure that is very similar to that of the voltage-multiplying stages 26.1-26.3 and differs from the latter solely in the orientation of the diodes, as will be explained in detail hereinafter.

In particular, in the voltage-multiplying stages 54.1-54.3 the boosting capacitors are designated by 56.1, 56.2, 56.3, the filter capacitors by 58.1, 58.2, 58.3, the diodes by 60.1, 60.2, 60.3 and 62.1, 62.2, 62.3, the intermediate nodes by 64.1, 64.2, 64.3, the output nodes by 66.1, 66.2, 66.3, and the output voltages by $V_{H4}$, $V_{H5}$, and $V_{H6}$.

In addition, the diodes 60.1-60.3 and 62.1-62.3 of the voltage-multiplying circuit 52 have an orientation opposite to that of the diodes 40.1-40.3 and 42.1-42.3 of the voltage-multiplying circuit 25, and in particular the diodes 60.1-60.3 (corresponding to the diodes 40.1-40.3) have anode terminals connected, respectively, to the output nodes 66.1-66.3 and cathode terminals connected, respectively, to the intermediate nodes 64.1-64.3 (corresponding to the intermediate nodes 44.1-44.3), whilst the diodes 62.1-62.3 (corresponding to the diodes 42.1-42.3) have anode terminals connected, respectively, to the intermediate nodes 64.1-64.3 and cathode terminals connected to the ground line 32.

Owing to the different connection of the diodes 60.1-60.3 and 62.1-62.3 with respect to the diodes 40.1-40.3 and 42.1-42.3, the output voltages $V_{H4}$, $V_{H5}$, and $V_{H6}$ assume negative values which, if the loads connected to the output nodes 66.1-66.3 are equal and the boosting capacitors 58.1-58.3 have capacitances equal to one another and equal to an appropriate value that is a function of the loads, are respectively equal to the voltage $V_I$, to twice the voltage $V_I$, and to three times the voltage $V_I$.

Also in this case, by acting on the sizing of the boosting capacitors 58.1-58.3 it is possible to obtain output voltages $V_{H4}$, $V_{H5}$, and $V_{H6}$ correlated to the voltage $V_I$ through a non-integer proportionality factor.

From what has been described above it is therefore evident how the possible modifications and variations that may be made to the dc-to-dc converters 20 and 50 described above may be numerous, without thereby departing from the protection scope of the present invention defined in the attached claims.

In particular, by acting on the number of voltage-multiplying circuits, on the number of voltage-multiplying stages forming each of the voltage-multiplying circuits, on the orientation of the diodes of each of the voltage-multiplying stages, and on the capacitance of each of the boosting capacitors, it is possible to obtain dc-to-dc converters supplying output voltages of either sign and having values that are proportional to the voltage $V_I$ through any multiplication factors whatsoever, even including non-integers.

For example, it would be possible to make a dc-to-dc converter provided with a voltage-multiplying circuit formed even by a single voltage-multiplying stage identical to the voltage-multiplying stages 54.1-54.3, and this would enable an output voltage $V_{H1}$ to be obtained that is equal to the voltage $V_I$ present on the intermediate node 34 multiplied by a negative factor.

In addition, it is emphasized that not all the voltage-multiplying stages of a voltage-multiplying circuit must necessarily have diodes with the same orientation.

For example, it would be possible to make a dc-to-dc converter provided with a voltage-multiplying circuit formed by a plurality of cascaded voltage-multiplying stages, some of which are identical to the voltage-multiplying stages 26.1-26.3, i.e., having positive multiplication factors, and others identical to the voltage-multiplying stages 54.1-54.3, i.e., having negative multiplication factors.

The above possibility, allied to the possibility of acting on the sizing of the boosting capacitors, contributes to rendering the flexibility of the dc-to-dc converter according to the present invention practically unlimited in terms of freedom of definition of the values of the output voltages.

## Claims

1. An inductive dc-to-dc switching converter (20, 50) comprising inductive means (22) connected, via first controlled switching means (24), between a first line (30) and a second line (32) respectively set at a first potential ($V_A$) and at a second potential ($V_{GND}$); **characterized in that** it further comprises voltage-multiplying means (25, 52) having an input connected to an intermediate node (34) between said inductive means (22) and said first controlled switching means (24), and at least one output supplying a potential ($V_{H1}$, $V_{H2}$, $V_{H3}$, $V_{H4}$, $V_{H5}$, $V_{H6}$) correlated to the potential ($V_I$) of said intermediate node (34).

2. An inductive dc-to-dc switching converter according to Claim 1, **characterized in that** said voltage-multiplying means (25, 52) are of a capacitive type.

3. An inductive dc-to-dc switching converter according to Claim 1 or Claim 2, **characterized in that** said voltage-multiplying means (25, 52) comprise at least one voltage-multiplying stage (26.1, 26.2, 26.3, 54.1, 54.2, 54.3).

4. An inductive dc-to-dc switching converter according to Claim 3, **characterized in that** said voltage-multiplying stage (26.1, 26.2, 26.3, 54.1, 54.2, 54.3) has an input connected to said intermediate node (34) and an output (46.1, 46.2, 46.3, 66.1, 66.2, 66.3) supplying an output potential ($V_{H1}$, $V_{H2}$, $V_{H3}$, $V_{H4}$, $V_{H5}$, $V_{H6}$) equal to the potential ($V_I$) of said intermediate node (34) multiplied by a multiplication factor; said voltage-multiplying stage comprising input capacitive means (36.1, 36.2, 36.3, 56.1, 56.2, 56.3) connected between said input of said voltage-multiplying stage and a first node (44.1, 44.2, 44.3, 64.1, 64.2, 64.3); second controlled switching means (40.1, 40.2, 40.3, 60.1, 60.2, 60.3) connected between said first node and said output of said voltage-multiplying stage; third controlled switching means (42.1, 42.2, 42.3, 62.1, 62.2, 62.3) connected between said first node and a second node (32, 46.1, 46.2, 66.1, 66.2); and output capacitive means (38.1, 38.2, 38.3, 58.1, 58.2, 58.3) connected between said output of said voltage-multiplying stage and a third node (32, 46.1, 46.2, 66.1, 66.2)

5. An inductive dc-to-dc switching converter according to Claim 4, **characterized in that** said second controlled switching means comprise first unipolar switching means (40.1, 40.2, 40.3, 60.1, 60.2, 60.3), and **in that** said third controlled switching means (42.1, 42.2, 42.3, 62.1, 62.2, 62.3) comprise second unipolar switching means.

6. An inductive dc-to-dc switching converter according to Claim 5, **characterized in that** said first unipolar switching means comprise a first diode (40.1, 40.2, 40.3, 60.1, 60.2, 60.3), and **in that** said second unipolar switching means comprise a second diode (42.1, 42.2, 42.3, 62.1, 62.2, 62.3).

**7.** An inductive dc-to-dc switching converter according to Claim 6, **characterized in that** said first diode (40.1, 40.2, 40.3) has an anode terminal connected to said first node (44.1, 44.2, 44.3) and a cathode terminal connected to said output (46.1, 46.2, 46.3) of said voltage-multiplying stage (26.1, 26.2, 26.3); and **in that** said second diode (42.1, 42.2, 42.3) has an anode terminal connected to said second node (32, 46.1, 46.2) and a cathode terminal connected to said first node (44.1, 44.2, 44.3).

**8.** An inductive dc-to-dc switching converter according to Claim 6, **characterized in that** said first diode (60.1, 60.2, 60.3) has an anode terminal connected to said first output (66.1, 66.2, 66.3) of said voltage-multiplying stage (54.1, 54.2, 54.3) and a cathode terminal connected to said first node (64.1, 64.2, 64.3); and **in that** said second diode (62.1, 62.2, 62.3) has an anode terminal connected to said first node (64.1, 64.2, 64.3) and a cathode terminal connected to said second node (32, 46.1, 46.2).

**9.** An inductive dc-to-dc switching converter according to any of Claims 4-8, wherein said first line is a supply line (30) set at a first supply potential ($V_A$), and said second line is a ground line (32) set at a ground potential ($V_{GND}$), **characterized in that** said third controlled switching means (42.1, 42.2, 42.3, 62.1, 62.2, 62.3) are connected between said first node (44.1, 44.2, 44.3, 64.1, 64.2, 64.3) and said ground line (32); and **in that** said output capacitive means (38.1, 38.2, 38.3, 58.1, 58.2, 58.3) are connected between said output (46.1, 46.2, 46.3, 66.1, 66.2, 66.3) of said voltage-multiplying stage (26.1, 26.2, 26.3, 54.1, 54.2, 54.3) and said ground line (32).

**10.** An inductive dc-to-dc switching converter according to any of Claims 4-8, **characterized in that** said voltage-multiplying means (25, 52) comprise a pair of said voltage-multiplying stages (26.1, 26.2, 26.3, 54.1, 54.2, 54.3) cascade-connected together and each having a respective input connected to said intermediate node (34) and a respective output (46.1, 46.2, 46.3, 66.1, 66.2, 66.3) supplying a respective output potential ($V_{H1}$, $V_{H2}$, $V_{H3}$, $V_{H4}$, $V_{H5}$, $V_{H6}$) equal to the potential ($V_I$) of said intermediate node (34) multiplied by a respective multiplication factor.

**11.** An inductive dc-to-dc switching converter according to Claim 10, **characterized in that** the third controlled switching means (42.1, 42.2, 42.3, 62.1, 62.2, 62.3) of a voltage-multiplying stage (26.2, 26.3, 54.2, 54.3) following the first in the cascade are connected between the respective first node (44.2, 44.3, 64.2, 64.3) and the output (46.1, 46.2, 66.1, 66.2) of the voltage-multiplying stage (26.1, 26.2, 54.1, 54.2) preceding in the cascade.

**12.** An inductive dc-to-dc switching converter according to Claim 10 or Claim 11, **characterized in that** the output capacitive means (38.2, 38.3, 58.2, 28.3) of a voltage-multiplying stage (26.2, 26.3, 54.2, 54.3) following the first in the cascade are connected between the respective output (46.2, 46.3, 66.2, 66.3) and the output (46.1, 46.2, 66.1, 66.2) of the voltage-multiplying stage (26.1, 26.2, 54.1, 54.2) preceding in the cascade.

**13.** An inductive dc-to-dc switching converter according to Claim 10 or Claim 11, in which said first line is a supply line (30) set at a first supply potential ($V_A$), and said second line is a ground line (32) set at a ground potential ($V_{GND}$), **characterized in that** the output capacitive means (38.2, 38.3, 58.2, 28.3) of a voltage-multiplying stage (26.2, 26.3, 54.2, 54.3) following the first in the cascade are connected between the respective output (46.2, 46.3, 66.2, 66.3) and said ground line (32).

**14.** An inductive dc-to-dc switching converter according to any of Claims 10-13, wherein said first line is a supply line (30) set at a first supply potential ($V_A$), and said second line is a ground line (32) set at a ground potential ($V_{GND}$), **characterized in that** the third controlled switching means (42.1, 62.1) of the voltage-multiplying stage (26.1, 54.1) first in the cascade are connected between said first node (44.1, 64.1) and said ground line (32); and **in that** said output capacitive means (38.1, 58.1) of the voltage-multiplying stage (26.1, 54.1) first in the cascade are connected between the respective output (46.1, 66.1) and said ground line (32).

Fig.1

Fig.2

Fig.3

## EUROPEAN SEARCH REPORT

**European Patent Office**

**Application Number**

EP 00 83 0672

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 1997, no. 08, 29 August 1997 (1997-08-29) & JP 09 093914 A (TOSHIBA CORP.), 4 April 1997 (1997-04-04) * abstract * | 1-14 | H02M3/155 H02M3/07 |
| X | PATENT ABSTRACTS OF JAPAN vol. 1995, no. 08, 29 September 1995 (1995-09-29) & JP 07 123702 A (SUMITOMO METAL IND.), 12 May 1995 (1995-05-12) * abstract * | 1-14 | |
| X | EP 0 766 371 A (KABUSHIKI KAISHA TOSHIBA) 2 April 1997 (1997-04-02) * abstract; figures 2-4 * | 1-14 | |
| X | EP 0 647 011 A (OKI ELECTRIC INDUSTRY COMPANY) 5 April 1995 (1995-04-05) * abstract * * figures 1,6 * | 1 | |
| X | BRUCE D. MOORE: "Reglerstrukturen für batteriebetriebene Systeme" ELEKTRONIK, pages 94-100, XP000425092 Munchen, DE * figure 5 * | 1 | TECHNICAL FIELDS SEARCHED (Int.Cl.7) H02M |
| A | EP 0 295 858 A (VARIAN ASSOCIATES INC.) 21 December 1988 (1988-12-21) * abstract * * figure 1 * | 1-14 | |

-/--

The present search report has been drawn up for all claims

| Place of search | Date of completion of the search | Examiner |
|---|---|---|
| THE HAGUE | 5 April 2001 | Lund, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 00 83 0672

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 660 138 A (YOSHIO TAKAMURA ET AL.) 21 April 1987 (1987-04-21) * abstract * * figure 1 * --- | 1-14 | |
| A | PATENT ABSTRACTS OF JAPAN vol. 009, no. 056 (E-302), 12 March 1985 (1985-03-12) & JP 59 194667 A (TOSHIBA CORP.), 5 November 1984 (1984-11-05) * abstract * ----- | 10-14 | |

TECHNICAL FIELDS
SEARCHED (Int.Cl.7)

The present search report has been drawn up for all claims

| Place of search | Date of completion of the search | Examiner |
|---|---|---|
| THE HAGUE | 5 April 2001 | Lund, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**　　　EP 00 83 0672

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2001

| Patent document cited in search report | | Publication date | Patent family member(s) | | Publication date |
|---|---|---|---|---|---|
| JP 09093914 | A | 04-04-1997 | NONE | | |
| JP 07123702 | A | 12-05-1995 | NONE | | |
| EP 766371 | A | 02-04-1997 | JP | 9093909 A | 04-04-1997 |
| | | | JP | 9098565 A | 08-04-1997 |
| | | | KR | 244103 B | 01-02-2000 |
| | | | US | 5744943 A | 28-04-1998 |
| EP 647011 | A | 05-04-1995 | JP | 2828881 B | 25-11-1998 |
| | | | JP | 7107737 A | 21-04-1995 |
| | | | DE | 69415258 D | 28-01-1999 |
| | | | DE | 69415258 T | 24-06-1999 |
| | | | US | 5572414 A | 05-11-1996 |
| EP 295858 | A | 21-12-1988 | US | 4821165 A | 11-04-1989 |
| | | | AU | 608854 B | 18-04-1991 |
| | | | AU | 1765988 A | 15-12-1988 |
| | | | CA | 1308779 A | 13-10-1992 |
| | | | DE | 3889012 D | 19-05-1994 |
| | | | DE | 3889012 T | 21-07-1994 |
| | | | JP | 1016261 A | 19-01-1989 |
| | | | US | 4945464 A | 31-07-1990 |
| US 4660138 | A | 21-04-1987 | JP | 61085070 A | 30-04-1986 |
| JP 59194667 | A | 05-11-1984 | JP | 1753174 C | 23-04-1993 |
| | | | JP | 4040948 B | 06-07-1992 |

EPO FORM P0459

For more details about this annex : see Official Journal of the European Patent Office, No. 12/82